# FASCICULE DE BREVET EUROPEEN

(11) **EP 3 494 475 B1**
(45) Date de publication et mention de la délivrance du brevet: **20.10.2021**
(21) Numéro de dépôt: 17752311.5
(22) Date de dépôt: 26.07.2017
(51) Int. Cl.: G06F 8/41, G06F 9/48, G06F 9/50

(54) **PROCEDE ET DISPOSITIF DE DISTRIBUTION DE PARTITIONS SUR UN PROCESSEUR MULTI-COEURS**
VERFAHREN UND VORRICHTUNG ZUR VERTEILUNG VON PARTITIONEN AUF EINEM MEHRKERNPROZESSOR
METHOD AND DEVICE FOR DISTRIBUTING PARTITIONS ON A MULTICORE PROCESSOR

(30) Priorité: 04.08.2016 FR 1601198
(43) Date de publication de la demande: 12.06.2019
(73) Titulaire: Thales, 92400 Courbevoie (FR)
(72) Inventeur: LE RHUN, Jimmy, 91767 Palaiseau Cedex (FR); GRACIA PEREZ, Daniel, 91767 Palaiseau Cedex (FR); GIRBAL, Sylvain, 91767 Palaiseau Cedex (FR)
(74) Mandataire: Marks & Clerk France
(86) Numéro de dépôt international: PCT/EP2017/068937
(87) Numéro de publication internationale: WO 2018/024581

(56) Documents cités:
- EP-A2- 1 501 013
- WO-A1-2014/072628
- US-A1- 2007 079 150
- US-A1- 2008 263 324
- US-A1- 2010 199 280
- US-A1- 2013 111 152
- US-A1- 2015 286 574
- RAM RANGAN ET AL: "Performance scalability of decoupled software pipelining", ACM TRANSACTIONS ON ARCHITECTURE AND CODE OPTIMIZATION, ASSOCIATION FOR COMPUTING MACHINERY, 2 PENN PLAZA, SUITE 701 NEW YORK NY 10121-0701 USA, vol. 5, no. 2, 3 septembre 2008 (2008-09-03), pages 1-25, XP058204221, ISSN: 1544-3566, DOI: 10.1145/1400112.1400113
- A.D Pimentel ET AL: "A systematic approach to exploring embedded system architectures at multiple abstraction levels", IEEE Transactions on Computers, 1 janvier 2006 (2006-01-01), pages 99-112, XP055360001, New York DOI: 10.1109/TC.2006.16 Extrait de l'Internet: URL:http://daedalus.liacs.nl/publications/ Pimentel2006TC.pdf [extrait le 2017-03-29]
- CASTRILLON JERONIMO ET AL: "Multi/many-core programming: Where are we standing?", 2015 DESIGN, AUTOMATION & TEST IN EUROPE CONFERENCE & EXHIBITION (DATE), EDAA, 9 mars 2015 (2015-03-09), pages 1708-1717, XP032765884, DOI: 10.7873/DATE.2015.1129
- Todor Stefanov ET AL: "Y-Chart Based System Level Performance Analysis: An M-JPEG Case Study", PROGRESS WORKSHOP 2000, 31 décembre 2000 (2000-12-31), XP055359988, Extrait de l'Internet: URL:http://liacs.leidenuniv.nl/~stefanovtp /pdf/Progress_00.pdf [extrait le 2017-03-29]

## Description

### Domaine de l'invention

L'invention concerne le domaine des systèmes embarqués et plus particulièrement concerne un procédé et un dispositif permettant la distribution de partitions sur un processeur multi-cœurs d'un calculateur avionique.

### Etat de la Technique

Les calculateurs avioniques civils sont soumis à des exigences de sûreté très contraignantes qui font qu'ils sont conçus de manière spécifique à la différence d'autres calculateurs embarqués comme ceux pour l'automobile, pour des systèmes industriels ou encore pour des systèmes militaires. En effet, une défaillance d'un calculateur sur le vol d'un avion de ligne peut avoir des conséquences catastrophiques pour ses nombreux passagers. Le caractère critique de ces systèmes opérant en temps réel est leur temps de réponse. En effet, une caractéristique fondamentale d'un système temps-réel est que son temps de réponse doit impérativement être inférieur à une valeur prédéterminée, dite échéance ou « deadline » selon l'anglicisme consacré. Et de fait, il est impératif que le temps d'exécution d'une séquence ou d'une trame de tâches logicielles soit déterministe et répétable. Des normes et des régulations spécifiques, telles que - ED-12C/DO-178C, ED-80/DO-254, ED-124/DO-297 ou ARINC 653 - imposent des techniques particulières pour assurer un déterminisme temporel dans l'exécution des applications du calculateur. Pour des raisons de sûreté, le temps d'exécution qui est pris en compte est le temps d'exécution dans le pire cas ou « Worst-Case Execution Time (WCET) » selon l'anglicisme consacré, qui est le temps maximum quand divers événements indésirables, internes et externes au système surviennent. En vue de minimiser ces effets indésirables, une approche consiste à garantir une isolation stricte entre les sous-ensembles fonctionnels d'un logiciel, à la fois dans le temps et dans l'espace mémoire. Il est connu d'utiliser des techniques de partitionnement entre les applications logicielles, techniques basées sur la virtualisation d'adresses dans l'espace mémoire grâce à des ressources matérielles dédiées d'unité de gestion mémoire ou « Memory Management Unit » (MMU) et sur l'ordonnancement statique des partitions dans le temps.

L'article de J. Littlefield-Lawwill and al. "System considerations for robust time and space partitioning in integrated modular avionics" (978-1-4244-2208-1/08 2008 IEEE) présente un partitionnement temporel pour un système RTOS (Real Time Operating System) dans le cadre de la norme ARINC 653.

De telles techniques d'isolation opèrent efficacement sur des processeurs mono-cœur, y compris lorsque certaines fonctionnalités qui sont défavorables au déterminisme sont désactivées et/ou lorsque des marges temporelles sont appliquées.

Cependant, les applications avioniques étant de plus en plus nombreuses et complexes, par exemple pour des contrôles plus précis de trajectoire 4D, pour l'intégration de données ou des affichages pour cockpit de nouvelle génération, elles sont demandeuses de plus de performance. Or, les systèmes informatiques embarqués actuels déploient les applications sur des calculateurs mono-cœur qui ne peuvent plus amener de performance par une augmentation de la fréquence de fonctionnement, en particulier en raison de l'augmentation des courants de fuite dans les transistors sub-micrométriques.

Aussi, il existe le besoin de calculateurs plus performants. Les processeurs multi-cœurs représentent un bon compromis performance, consommation, coût. Or, bien que de tels processeurs répondent théoriquement aux besoins de performance et aux contraintes de volume, de poids et de consommation de l'avionique, il est actuellement recommandé de ne pas utiliser de tels processeurs multi-cœurs dans l'avionique car les principes d'isolation spatiale et temporelle ne sont pas garantis. En effet, des accès concurrents par plusieurs cœurs à des ressources partagées d'une même puce entraînent des contentions qui dégradent très fortement le déterminisme temporel. Ces contentions mutuelles sont connues comme étant des « interférences ».

Aussi, un problème spécifique aux processeurs multi-cœurs est qu'en cas de requête simultanée par plusieurs cœurs sur une même ressource partagée, y compris une demande d'accès à un bus d'interconnexion ou d'accès à la hiérarchie mémoire, un arbitrage doit être opéré au niveau matériel pour accorder l'accès à un cœur et bloquer les autres jusqu'à la fin de la transaction. Les inconvénients engendrés par l'arbitrage sont entre autres une variabilité du temps d'exécution des applications.

La variabilité du temps d'exécution n'est pas forcément problématique pour les calculateurs multi-cœurs non temps-réel utilisés pour des ordinateurs personnels, des serveurs ou des terminaux mobiles par exemple, car pour ces dispositifs le temps d'exécution moyen reste meilleur qu'avec un processeur mono-cœur, et un temps d'exécution qui est anormalement long reste tolérable.

Cependant, pour les applications temps-réel critiques, une variabilité due aux interférences dégrade fortement la capacité à évaluer le temps d'exécution dans le pire cas (WCET), ce qui est contraire aux exigences de certification.

La demande de brevet U.S. 2010/0199280 A1 de Vestal et al. présente une solution de partitionnement pour processeur multi-cœurs dans le domaine de l'avionique. Cette solution cherche à estimer l'impact des interférences sur les applications s'exécutant sur un processeur multi-cœurs, puis à modifier l'ordonnancement de ces applications afin de minimiser l'impact de ces interférences. Une telle modification nécessite une coûteuse re-certification du système, tout en ne garantissant pas l'absence d'interférences.

Il est donc nécessaire de fournir une solution qui remédie aux inconvénients précités. La présente invention répond à ce besoin.

### Résumé de l'invention

Pour atteindre cet objectif, un objet de la présente invention est de proposer un dispositif et un procédé d'ordonnancement de tâches logicielles sur un processeur multi-cœurs particulièrement adapté aux systèmes temps-réels critiques.

Le procédé de l'invention présente comme avantages :
- de respecter les contraintes établies dans le domaine de l'avionique et ainsi pouvoir être facilement acceptable par les autorités avioniques et certifiable ;
- de pouvoir réutiliser un processus de développement d'applications établi pour les processeurs mono-cœurs ;
- de ne pas nécessiter de modification dans les applications existantes ;
- de pouvoir améliorer les performances des applications sensibles aux performances des accès mémoire ; et
- de permettre une meilleure homogénéité thermique du processeur.

Pour obtenir les résultats recherchés, l'invention est définie selon le procédé exposé dans le jeu de revendications joint.

L'invention couvre aussi un dispositif pour distribuer les partitions d'une séquence de partitions sur les cœurs d'un processeur multi-cœurs, le dispositif comprenant des moyens pour mettre en œuvre les étapes du procédé revendiqué.

L'invention peut opérer sous la forme d'un produit programme d'ordinateur qui comprend des instructions de code permettant d'effectuer les étapes du procédé revendiqué lorsque le programme est exécuté sur un ordinateur.

### Description des figures

Différents aspects et avantages de l'invention vont apparaitre en appui de la description d'un mode préféré d'implémentation de l'invention mais non limitatif, avec référence aux figures ci-dessous :
La figure 1 illustre une architecture de processeur multi-cœurs dans laquelle la méthode de l'invention peut être opérée;
La figure 2 illustre un exemple d'ordonnancement mono-cœur séquentiel de partitions;
La figure 3 illustre un exemple d'ordonnancement multi-cœurs séquentiel de partitions dans un mode de réalisation de l'invention ;
La figure 4 montre un enchainement d'étapes du procédé d'assignation des partitions à des cœurs selon un mode de réalisation de l'invention.

### Description détaillée de l'invention

La description qui suit s'appuie sur des exemples pour permettre une bonne compréhension des principes de l'invention, et une application concrète, mais n'est en rien exhaustive et doit permettre à l'homme du métier d'appliquer des modifications et des variantes d'implémentation en gardant les mêmes principes. Ainsi la présente description de l'invention est faite pour illustrer une implémentation préférentielle dans le domaine des calculateurs avioniques mais n'est pas limitative, et pourrait s'utiliser dans d'autres domaines bénéficiant de l'utilisation de processeurs multi-cœurs.

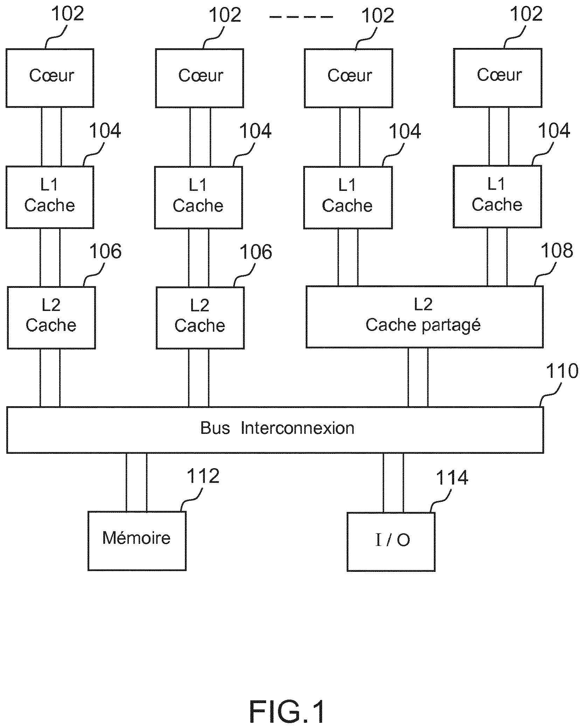

La figure 1 illustre de manière simplifiée une architecture (100) de processeur multi-cœurs dans laquelle la méthode de l'invention peut être opérée.

Un processeur multi-cœurs contient une pluralité de cœurs de processeurs, typiquement pouvant aller de 2 à 12. Le processeur (100) comprend des mémoires cache de premier niveau (104), dites mémoire cache « L1 » et des mémoires cache de second niveau (106, 108), dites mémoire cache « L2 ». Les mémoires cache de premier niveau (104) sont associées respectivement à un cœur de processeur (102) et sont dites mémoires caches privées. Les mémoires caches de second niveau peuvent soit être des mémoires (106) privées par cœur de processeur, soit être des mémoires (108) partagées entre plusieurs cœurs. Le processeur peut aussi comprendre des mémoires cache de troisième niveau partagées (non représentées), dites mémoire cache « L3 ».

Le processeur multi-cœurs comprend de plus un ou plusieurs contrôleurs mémoire (112), qui peuvent être des mémoires externes de type débit de données double ou « Double Data Rate (DDR) » selon l'anglicisme consacré, et divers périphériques d'entrées-sorties « I/O » (114) partagés. L'ensemble des éléments du processeur est interconnecté par un bus ou un ensemble de bus ou un réseau d'interconnexion partagé (110).

Le processeur comprend aussi un module d'ordonnancement (116) permettant de gérer le partitionnement des tâches logicielles ou des applications. Ce module est typiquement implémenté sous la forme d'un logiciel, désigné selon les cas sous le nom d'hyperviseur ou de système d'exploitation temps-réel, spécialement conçu pour garantir l'isolation temporelle et spatiale entre des partitions, au sens de la norme ARINC653.

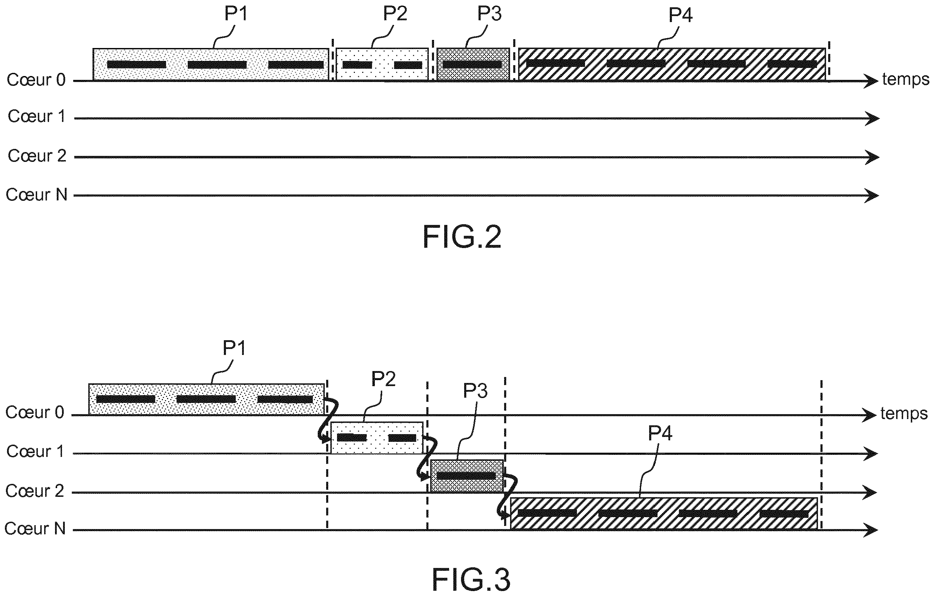

La figure 2 illustre un exemple de partitionnement de l'art antérieur dans le cas soit d'un processeur mono-cœur (C0) ou dans le cas d'un processeur multi-cœurs (C0 à CN) n'utilisant qu'un seul cœur. L'axe des abscisses représente le temps et l'axe des ordonnées représente les cœurs du processeur. Dans l'exemple, quatre partitions sont exécutées pendant la durée d'une séquence. Les partitions se répètent selon un motif cyclique (P1, P2, P3, P4), un seul motif étant représenté. Les partitions peuvent avoir des durées différentes. Au sein de chaque partition, une ou plusieurs tâches logicielles 'T' s'exécutent de manière séquentielle. Ainsi, pendant la durée de la première partition 'P1', trois tâches 'T1-1' à T1-3' s'exécutent, puis au sein de la deuxième partition 'P2', deux tâches 'T2-1' et 'T2-2' s'exécutent, une seule tâche 'T3-1' s'exécute au sein de la troisième partition 'P3' et quatre tâches 'T4-1' à 'T4-4' s'exécutent au sein de la quatrième partition 'P4'. L'isolation temporelle entre chaque partition est illustrée par les pointillés verticaux, et n'est pas décrite plus en détail, toute technique connue d'isolation temporelle pouvant être envisagée. Les interstices entre partitions correspondent à des temps système pour permettre l'ordonnancement selon le système d'exploitation.

De manière générale, tel qu'illustré sur la figure 3, le principe de l'invention consiste à allouer un cœur de processeur distinct à chaque partition appartenant à une trame comportant une pluralité de partitions, sans modifier l'ordonnancement des partitions. Le séquencement des partitions reste identique, chaque partition étant déployée sur un cœur différent, et avantageusement chaque cœur de processeur n'exécute qu'une seule partition. Avantageusement, le mécanisme proposé permet d'exploiter un gain de performance sur un processeur multi-cœurs tout en respectant les contraintes existantes comme sur un processeur mono-cœur.

Ainsi, sur la figure 3 qui reprend le même exemple que celui de la figure 2, une séquence comportant quatre partitions est illustrée. La première partition 'P1' s'exécute sur le cœur 'C0', la deuxième partition 'P2' s'exécute sur le cœur 'C1', la troisième partition 'P3' s'exécute sur le cœur 'C2' et la quatrième partition 'P4' s'exécute sur le cœur 'C3'. L'homme de l'art comprend que la figure 3 n'est qu'un exemple simplifié choisi pour permettre une bonne compréhension des principes de l'invention mais n'est en rien limitatif, tant sur le nombre de partitions, de tâches au sein de chaque partition, de durée de chaque partition ou encore du nombre de cœurs auxquels allouer les partitions.

Dans un mode de réalisation où le nombre de partitions de la séquence est inférieur ou égal au nombre de cœurs disponibles du processeur, l'allocation des partitions vers les cœurs de processeur selon le principe de l'invention permet un gain en terme d'accès à l'espace mémoire. En effet, chaque partition étant déployée sur un cœur qui lui est assigné, elle dispose de l'usage exclusif des mémoires caches associées à ce cœur. De plus, l'ordonnancement séquentiel des partitions étant maintenu, la contrainte d'isolation temporelle est conservée, une seule partition pouvant s'exécuter à un moment donné, après la fin de la partition précédente.

Avantageusement, l'ordonnancement statique séquentiel garantit l'absence d'interférence, et garantit donc un séquencement d'exécution complet qui est similaire à celui de l'exécution de toutes les partitions sur un même cœur. Par ailleurs, chaque cœur n'est pas soumis comme cela est le cas dans l'ordonnancement mono-cœur à l'exigence de devoir supprimer des données et des instructions rémanentes des mémoires, puisque chaque cœur exécute toujours la même partition, il peut conserver ces informations en mémoire cache pour une activation de la partition à l'activation suivante. Avantageusement, le principe de l'invention permet d'économiser le temps passé à invalider la mémoire cache privée, le temps passé à y recharger les données depuis la mémoire externe, et ce à chaque activation de la partition.

Dans un mode d'implémentation où l'architecture du processeur est dite « clusterisée » présentant des mémoires cache L2 partagées par un sous-ensemble de cœurs (tel que 108 sur la figure 1), le principe de l'invention permet dans une première variante de limiter l'assignation des partitions à un seul cœur par cluster ou sous-ensemble de cœurs et opérer comme si la mémoire cache L2 était privée. Dans une autre variante, tous les cœurs d'un même cluster sont utilisés pour opérer comme un cas où la mémoire cache L2 est partagée. Il est alors possible d'appliquer la présente invention au(x) seul(s) niveau(x) de cache privé(s).

Alternativement, dans une autre variante, une politique de partage intra-cluster optimisée peut être définie, par exemple en réalisant un partitionnement spatial du cache L2 avec des techniques de coloration ou par une configuration du cache L2 ou MMU, si le processeur le permet.

Dans un mode de réalisation où le nombre de partitions de la séquence est supérieur au nombre de cœurs disponibles sur le processeur, le procédé d'assignation des partitions de l'invention permet de déterminer les partitions requérant le plus de ressources ou les partitions les plus critiques afin de les allouer chacune à un cœur dédié, et conserver pour l'ensemble des autres partitions un fonctionnement sur un seul cœur. Ainsi avantageusement, le procédé permet de traiter les cas où toutes les partitions non éligibles à une exécution solitaire sur un cœur, sont toutes assignées à un cœur restant. Pour garantir l'isolation temporelle des partitions exécutées sur un seul cœur, un processus d'invalidation de cache peut être activé lors du passage d'une partition à une autre, afin d'assurer que chaque partition démarre dans un état connu du système. Alternativement, l'invalidation peut ne pas être activée entre deux exécutions consécutives d'une même partition sur un cœur, si aucune autre partition ne s'est exécutée sur ce cœur entre temps.

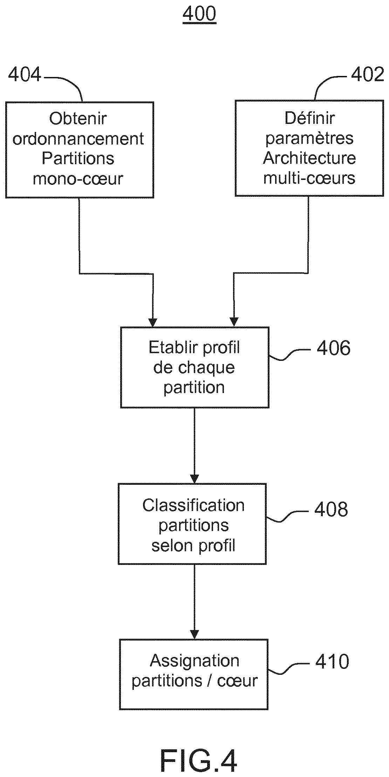

La figure 4 montre un enchainement d'étapes (400) du procédé d'assignation des partitions à une pluralité de cœurs d'un processeur multi-cœurs selon un mode de réalisation. Les étapes du procédé peuvent être exécutées par des modules d'exécution dédiés d'un processeur multi-cœur tel qu'illustré sur la figure 1. Le procédé débute par une étape (402) d'identification des paramètres de l'architecture matérielle du processeur multi-cœurs, comprenant au moins le nombre 'N_{C}' de cœurs du processeur et la hiérarchie des mémoires en termes de mémoires privées et mémoires partagées, et de préférence la description des chemins de données privés et partagés ou l'emplacement physique des modules sur la puce. Dans un mode d'implémentation, les paramètres d'architecture sont fournis par un utilisateur et dépendent de l'intégration finale du processeur dans une application avionique. Alternativement, les paramètres peuvent être pré-existants à une architecture et obtenus de fichiers d'architecture.

Dans une autre étape (404), qui peut être simultanée ou différée, le procédé permet de définir les paramètres de l'ordonnancement initial des partitions pour un séquencement mono-cœur. L'ordonnancement initial peut être pré-existant à une architecture de processeur multi-cœurs qui opère en mono-cœur ou être défini pour une nouvelle architecture à configurer en utilisation multi-cœurs. Les paramètres d'ordonnancement initial comprennent au moins le nombre 'Np' de partitions, la durée 'Tp' allouée à chaque partition, les dates d'activation des partitions, et le temps total de la séquence d'exécution des partitions,

Dans une étape suivante (406), le procédé permet d'établir un profil de chaque partition selon différents critères. Le profilage des partitions permet de déterminer les partitions qui peuvent avoir un gain de performance à être couplées à une mémoire dédiée afin d'éviter l'invalidation de mémoire en début d'exécution de la partition ou déterminer les partitions dont l'exécution amène un point chaud qui est à réduire.

Dans un mode préférentiel, le profilage des partitions prend en compte les paramètres d'architecture matérielle et d'ordonnancement initial et est basé sur plusieurs estimations :
- la localité spatiale et temporelle des accès mémoires de chaque partition, qui peut être approximée par l'estimation de :
- la répartition des « cache-miss » (tentatives d'accès à une donnée n'étant pas disponible dans la mémoire cache, ce qui entraîne son chargement depuis le niveau suivant de la hiérarchie mémoire) dans le temps alloué à la partition ;
- le nombre d'accès mémoire de chaque partition, le volume de données accédées, et possiblement leur répartition entre lectures et écritures ; et
- la charge processeur (taux d'occupation de la ressource de calcul, dans le temps).

L'estimation de la localité spatiale et temporelle des accès mémoires permet de connaitre la réutilisation des données dans les caches (on parle de cache hit/miss rate). Ceci permet de mieux comprendre l'effet positif/négatif que les opérations de flush peuvent avoir sur une application. Ainsi une application avec une forte localité spatiale/temporelle souffrira beaucoup d'un flush, tandis qu'une application avec faible localité n'en souffrira pas beaucoup. L'estimation de la localité spatiale et temporelle peut aussi permettre de savoir si deux partitions avec un cache partagé (L2) peuvent ou non être de bonnes candidates pour partager le cache L2 (dans le cas d'une architecture clusterisée).

L'estimation du volume d'accès mémoire permet une meilleure connaissance de l'utilisation de la hiérarchie mémoire. Une partition accédant à peu de données (typiquement avec une forte localité) bénéficiera plus d'un accès exclusif à une mémoire cache privée même petite, tandis qu'une partition accédant à de grandes quantités de données générera de toute façon des rechargements de la mémoire cache.

L'estimation de la charge processeur permet une meilleure connaissance de la distribution thermique sur la puce. Avantageusement, ce critère permet de mieux répartir la distribution thermique et au lieu de concentrer l'activité sur un seul cœur, le procédé de l'invention permet de répartir l'activité sur tous les cœurs de la puce et d'étaler la dissipation de chaleur sur l'ensemble de la surface de la puce. Ainsi, le flux thermique à dissiper est minimisé, la température est plus homogène, et donc la fiabilité du calculateur est améliorée. En effet, des écarts de température importants sur une même puce peuvent provoquer des défaillances sur les contacts à l'échelle nanométrique, sous la forme de fatigue mécanique due à la dilatation.

Dans une étape suivante (408), le procédé permet de trier les partitions et établir une classification. Dans un mode de réalisation, les partitions sont classées en fonction d'une valeur qui est calculée pour chaque partition à partir des critères d'estimation.

Dans une variante, chaque critère peut être affecté d'un poids de pertinence qui peut être défini en fonction de l'application avionique.

Dans une étape suivante (410), le procédé permet d'assigner les 'Np' partitions à différents cœurs selon le classement issu de l'étape précédente.

Dans une variante d'implémentation où le nombre de cœurs 'N_{C}' du processeur est inférieur au nombre 'N_{P}' de partitions, le procédé permet d'affecter 'N_{C}-M' partitions en tête de la classification à 'N_{C}-M' cœurs et affecter l'ensemble des partitions restantes aux 'M' cœurs restants.

Dans une autre variante d'implémentation, les étapes (408) et (410) sont combinées pour réaliser une allocation directe selon le critère sélectionné. Par exemple si le critère est thermique, le procédé permettra de choisir de placer les partitions plus "chaudes" (c'est-à-dire ayant la charge CPU la plus élevée) dans les cœurs les plus éloignés.

Dans une autre variante d'implémentation, le procédé peut comporter une étape supplémentaire qui consiste à réévaluer le temps alloué à chaque partition opérant sur un cœur distinct et ainsi d'offrir un budget temporel supplémentaire permettant par exemple des évolutions applicatives.

Dans une autre variante d'implémentation, le procédé peut comporter une étape supplémentaire qui consiste à désactiver les cœurs pendant le temps où la partition qui leur est allouée ne s'exécute pas. Dans un mode de réalisation, la désactivation peut être faite découplage d'horloge ou « clock gating » afin de conserver les mémoires cache alimentées et garantir un redémarrage immédiat. Ceci a un avantage induit sur la durée de vie et la fiabilité du composant. Il en résulte aussi un gain de consommation.

Dans une variante d'implémentation, le procédé d'assignation de partitions aux cœurs du processeur comprend un mécanisme de synchronisation des partitions entre elles. En effet, il faut garantir qu'une partition ne peut commencer sur un cœur avant que la partition précédente soit terminée sur un autre cœur. Le procédé peut être implémenté selon des techniques connues telles que des barrières de synchronisation, ou utiliser un unique ordonnanceur cadencé par une horloge globale qui est systématiquement disponible dans les composants considérés pour les applications avioniques.

L'homme de l'art appréciera que des variations puissent être apportées sur le procédé décrit de manière préférentielle, tout en maintenant les principes de l'invention. Ainsi, les exemples décrits sont basés sur une architecture d'un processeur multi-cœurs d'une même puce, mais les principes de l'invention peuvent s'appliquer sur d'autres variantes d'architecture distribuée de processeur multi-cœurs, variantes portant sur le nombre de cœurs, la topologie de l'interconnexion, la profondeur et la topologie de la hiérarchie mémoire, la répartition des ressources partagées par exemple.

Par ailleurs, le procédé de la présente invention peut s'implémenter à partir d'éléments matériel et/ou logiciel. Il peut être disponible en tant que produit programme d'ordinateur sur un support lisible par ordinateur. Le support peut être électronique, magnétique, optique, électromagnétique ou être un support de diffusion de type infrarouge par exemple.

## Revendications

1. Procédé mis en œuvre par ordinateur pour distribuer les partitions d'une séquence de partitions sur les cœurs d'un processeur multi-cœurs, le procédé comprenant les étapes suivantes :
- identifier (402) des paramètres caractérisant l'architecture matérielle d'un processeur multi-cœurs ;
- identifier (404) des paramètres caractérisant un ordonnancement initial des partitions d'une séquence comprenant une pluralité de partitions, lesdits paramètres comprenant au moins un nombre de partitions, une durée allouée à chaque partition, des dates d'activation des partitions, et le temps total d'exécution de la séquence ;
- générer (406) un profil pour chaque partition de la séquence à partir des paramètres d'architecture et d'ordonnancement initial, cette étape de profilage prenant en compte des critères d'estimation de localité spatiale et temporelle des accès mémoires de chaque partition, de nombre d'accès mémoire de chaque partition, de volume de données accédées et de charge processeur ;
- classifier (408) les partitions selon leur profil ;
- assigner (410) l'exécution de chaque partition de la séquence selon la classification à un cœur du processeur multi-cœurs, de manière à ce que chaque dite partition s'exécute toujours sur le même cœur tout en maintenant l'ordonnancement séquentiel initial des partitions ;
- et exécuter la séquence de partitions.

2. Le procédé selon la revendication 1 dans lequel l'étape d'identification des paramètres d'architecture matérielle consiste au moins à définir l'architecture en termes de nombre de cœurs, de hiérarchie des mémoires partagées et/ou privées, de contrôleurs mémoires, de bus d'interconnexion.

3. Le procédé selon l'une quelconque des revendications 1 à 2 dans lequel l'étape de profilage consiste à déterminer les partitions qui peuvent avoir un gain de performance à être couplées à une mémoire dédiée.

4. Le procédé selon l'une quelconque des revendications 1 à 2 dans lequel l'étape de profilage consiste à déterminer les partitions dont l'exécution amène un point chaud qui est à réduire.

5. Le procédé selon l'une quelconque des revendications 1 à 4 dans lequel l'étape de classification consiste à calculer une valeur pour chaque partition en fonction des critères d'estimation et classifier les partitions selon la valeur obtenue.

6. Le procédé selon l'une quelconque des revendications 1 à 5 comprenant de plus une étape consistant à désactiver tous les cœurs assignés pendant le temps où la partition qui leur est allouée ne s'exécute pas.

7. Le procédé selon l'une quelconque des revendications 1 à 6 comprenant de plus une étape consistant à synchroniser l'exécution des partitions entre elles.

8. Un dispositif pour distribuer les partitions d'une séquence de partitions sur les cœurs d'un processeur multi-cœurs, le dispositif comprenant des moyens pour mettre en œuvre les étapes du procédé selon l'une quelconque des revendications 1 à 7.

9. Un produit programme d'ordinateur, ledit programme d'ordinateur comprenant des instructions de code permettant d'effectuer les étapes du procédé selon l'une quelconque des revendications 1 à 7, lorsque ledit programme est exécuté sur un ordinateur.

## Patentansprüche

1. Computerimplementiertes Verfahren zum Verteilen der Partitionen einer Folge von Partitionen zu den Kernen eines Multicore-Prozessors, wobei das Verfahren die folgenden Schritte beinhaltet:
- Identifizieren (402) von Parametern, die die Hardware-Architektur eines Multicore-Prozessors charakterisieren;
- Identifizieren (404) von Parametern, die eine anfängliche Anordnung der Partitionen einer Folge, die eine Vielzahl von Partitionen umfasst, charakterisieren, wobei die Parameter mindestens eine Anzahl von Partitionen, eine jeder Partition zugeordnete Dauer, Aktivierungstermine der Partitionen und die Gesamtausführungszeit der Folge umfassen;
- Generieren (406) eines Profils für jede Partition der Folge auf der Basis der Architektur- und anfänglichen Anordnungsparameter, wobei dieser Profilierungsschritt Kriterien des Schätzens der räumlichen und zeitlichen Lokalität der Speicherzugriffe jeder Partition, der Anzahl von Speicherzugriffen jeder Partition, des Volumens der abgerufenen Daten und der Prozessorlast berücksichtigt;
- Klassifizieren (408) der Partitionen nach ihrem Profil;
- Zuordnen (410) der Ausführung jeder Partition der Folge gemäß der Klassifikation zu einem Kern des Multicore-Prozessors, so dass jede Partition immer auf demselben Kern unter Beibehaltung der sequentiellen anfänglichen Anordnung der Partitionen ausgeführt wird;
- und Ausführen der Folge von Partitionen.

2. Verfahren nach Anspruch 1, wobei der Schritt des Identifizierens von Hardware-Architekturparametern zumindest darin besteht, die Architektur in Bezug auf die Anzahl der Kerne, die gemeinsame und/oder private Speicherhierarchie, die Speichersteuerungen und die Verbindungsbusse zu definieren.

3. Verfahren nach einem der Ansprüche 1 bis 2, wobei der Profilierungsschritt darin besteht, die Partitionen zu bestimmen, die durch die Kopplung mit einem dedizierten Speicher einen Leistungsgewinn haben können.

4. Verfahren nach einem der Ansprüche 1 bis 2, wobei der Profilierungsschritt darin besteht, die Partitionen zu bestimmen, deren Ausführung zu einem zu reduzierenden Hot Spot führt.

5. Verfahren nach einem der Ansprüche 1 bis 4, wobei der Klassifizierungsschritt darin besteht, einen Wert für jede Partition in Abhängigkeit von den Schätzkriterien zu berechnen und die Partitionen gemäß dem erhaltenen Wert zu klassifizieren.

6. Verfahren nach einem der Ansprüche 1 bis 5, das ferner einen Schritt beinhaltet, der darin besteht, alle zugeordneten Kerne während der Zeit zu deaktivieren, in der die ihnen zugeordnete Partition nicht ausgeführt wird.

7. Verfahren nach einem der Ansprüche 1 bis 6, die ferner einen Schritt beinhaltet, der darin besteht, die Ausführung der Partitionen miteinander zu synchronisieren.

8. Gerät zum Verteilen der Partitionen einer Folge von Partitionen auf die Kerne eines Multicore-Prozessors, wobei das Gerät Mittel zum Implementieren der Schritte des Verfahrens nach einem der Ansprüche 1 bis 7 umfasst.

9. Computerprogrammprodukt, wobei das Computerprogramm Codebefehle zur Durchführung der Schritte des Verfahrens nach einem der Ansprüche 1 bis 7 umfasst, wenn das Programm auf einem Computer ausgeführt wird.

## Claims

1. A computer implemented method for distributing partitions of a sequence of partitions on the cores of a multicore processor, the method comprising the following steps:
- identifying (402) parameters characterizing the hardware architecture of a multicore processor;
- identifying (404) parameters characterizing an initial ordering of the partitions of a sequence comprising a plurality of partitions, said parameters comprising at least a number of partitions, a time interval allocated to each partition, dates of activation of the partitions, and a total execution time of the sequence;
- generating (406) a profile for each partition of the sequence on the basis of the parameters of architecture and initial ordering; this profiling step taking into account criteria for estimating the spatial and temporal locality of the memory accesses of each partition, the number of memory accesses of each partition, the volume of data accessed, and the processor load;
- classifying (408) the partitions according to their profile;
- assigning (410) the execution of each partition of the sequence according to the classification to a core of the multicore processor, such that each partition is always executed on the same core, while maintaining the initial sequential ordering of the partitions;
- and executing the sequence of partitions.

2. The method according to claim 1, wherein the step of identifying the hardware architecture parameters consists at least in defining the architecture in terms of the number of cores, the hierarchy of shared and/or private memories, the memory controllers, and the interconnection buses.

3. The method according to any one of claims 1 to 2, wherein the profiling step consists in determining the partitions that may have a performance gain by being coupled to a dedicated memory.

4. The method according to any one claims 1 to 2, wherein the profiling step consists in determining the partitions whose execution gives rise to a hot spot which is to be reduced.

5. The method according to any one of claims 1 to 4, wherein the classification step consists in calculating a value for each partition on the basis of the estimation criteria, and classifying the partitions according to the value obtained.

6. The method according to any one of claims 1 to 5, further comprising a step of disabling all the assigned cores during the time interval in which the partition allocated to them is not executed.

7. The method according to any one of claims 1 to 6, further comprising a step of synchronizing the execution of the partitions with one another.

8. A device for distributing the partitions of a sequence of partitions on the cores of a multicore processor, the device comprising means for implementing the steps of the method according to any one of claims 1 to 7.

9. A computer program product, said computer program comprising code instructions for carrying out the steps of the method according to any one of claims 1 to 7 when said program is executed on a computer.
